# EUROPÄISCHE PATENTSCHRIFT

(11) **EP 1 558 191 B1**
(45) Veröffentlichungstag und Bekanntmachung des Hinweises auf die Patenterteilung: **03.05.2006**
(21) Anmeldenummer: 03775276.3
(22) Anmeldetag: 31.10.2003
(51) Int. Cl.: A61F 13/15, B32B 5/18, G10K 11/168, B29B 15/12, F02B 77/13, B32B 27/06

(54) **VERFAHREN ZUM DIREKTHINTERSCHÄUMEN VON ABSORBER-SYSTEMEN**
METHOD FOR THE DIRECT BACKFOAMING OF ABSORBER SYSTEMS
PROCEDE DE MOUSSAGE ARRIERE DIRECT DE SYSTEMES D'ABSORPTION

(30) Priorität: 05.11.2002 DE 10251327
(43) Veröffentlichungstag der Anmeldung: 03.08.2005
(73) Patentinhaber: HP-Chemie Pelzer Research and Development Ltd., Waterford (IE)
(72) Erfinder: SCHULZE, Volkmar, 84069 Schierling (DE); SPITZER, David, 58453 Witten (DE); TSCHUNGMELL, Stefan, 93049 Regensburg (DE); BOPP, Michael, 58455 Witten (DE); MANTEI, Carsten, 58313 Herdecke (DE)
(74) Vertreter: Jönsson, Hans-Peter
(86) Internationale Anmeldenummer: PCT/EP2003/012145
(87) Internationale Veröffentlichungsnummer: WO 2004/041138

(56) Entgegenhaltungen:
- DE-A- 19 734 913
- DE-A- 19 909 046
- DE-A- 19 911 815

## Beschreibung

Die vorliegende Erfindung betrifft ein Verfahren zur Herstellung von Masse-Absorber-Systemen, Schallisolierungen mit hoher wärmeformbeständiger, geräuschmindernder Wirkung, insbesondere für den Motorraum von Kraftfahrzeugen.

Im Motorraum von Kraftfahrzeugen finden zur Geräuschminderung reine Absorber-, Masse-Absorber-, Feder-Masse-Systeme sowie vibrationsdämpfende Systeme, Hitzeschilde mit absorptiver Wirkung und Helmholtz-Resonatoren Anwendung.

Allgemein sei hierzu auf die DE 198 21 532 A, DE 197 26 965 A, DE 197 34 913 A, DE 199 09 046 A, WO 02/09977, DE 197 39 778 A und WO 01/12470 sowie die DE 299 15 429 U verwiesen, wobei die DE 19904046 A als repräsentativ für den nächstliegenden Stand der Technik angesehen wird.

Bekannter Stand der Technik sind ein- und mehrschichtige Absorber aus Vliesmaterial und/oder aus offenporigen Schaumstoffen ohne und mit Schwerschicht, oft auch in Sandwichbauweise.

Feder-Masse-Systeme sind heute größtenteils mit PUR-Weichschaum hinterschäumte tiefgezogene oder stranggepresste Schwerfolien sowie hochgefüllte Schaumstoffe (Kompakt-Polyurethan-Schaumstoffe, hergestellt im Reaktionsspritzguss, kurz RIM genannt). Die Medienbeständigkeit kann erhöht werden, indem der PUR-Weichschaum mit einer Folie, einem Sprühverhautungsmittel oder mittels in-mouldcoating eingehautet wird.

Üblicherweise bestehen Masse-Absorber-Systeme aus einem Vlies oder Leicht- und Schnittschaum, oft in Kombination mit Melaminharzschaum, die in Deckvliese oder schalldurchlässige Folien eingehautet sind; und einer Schwerfolie. Die Vliese und Schäume selbst können wiederum mehrschichtig aufgebaut sein. Die Schwerfolie ist meist eine Copolymer-Folie, ein hochgefüllter (kompakter Polyurethan-(RIM)-Werkstoff bzw.) Schaumstoff oder ein Spritzgießteil.
Das Herstellungsverfahren besteht aus den Prozessschritten:
■ Formpressen des Absorbers,
■ Herstellen der Schwerfolie, der Masse
   (Tiefziehen, Strangpressen, Schäumen im Reaktionsspritzguss (RIM), Spritzgießen),
■ Fügen von Absorber und Masse und
■ Stanzen der Kontur.

Auch sind Verfahren bekannt, bei denen im Ein- oder Zweischritt-Verfahren Absorber und biegeweiche Schwerfolie verpresst werden.

Absorber und Masse werden heute aber produktionstechnisch größtenteils durch Verkleben, Verclipsen oder durch Verschweißen miteinander verbunden.

Beim Verkleben wird der Kleber partiell oder ganzflächig aufgetragen. Das erfordert einerseits ein Reinigen der Masse-Folie beispielsweise durch Waschen oder Sandstrahlen, um eine hinreichend gute Verklebung von Massefolie und Absorber zu erhalten; und andererseits einen zusätzlichen Prozessschritt, das Fügen von Absorber und Masse. In praxi zeigt es sich oft, dass die Klebeverbindungen nicht ausreichend halten, bzw. stabil sind. Auch ist das Verkleben ein aufwendiger Prozess, bei dem oft Kleberrückstände die Anlagen, Werkzeuge sowie den Arbeitsplatz verunreinigen.

Das Verclipsen und Verschweißen erfolgt, ebenfalls als zusätzlicher Prozessschritt, partiell; und garantiert somit nicht immer Dimension und Funktion einer Schallisolierung, des Masse-Absorber-Systems. Beim verclipsten System kommt es beim Fahren des Kraftfahrzeuges zu ungewollten Geräuschen aufgrund von Luftströmungen zwischen den Schichten; sowie beim verclipsten und verschweißten System zum Ein- und Weiterreißen des Absorbers und der Schwerfolie.

Das Verschweißen ist zudem apparativ sehr kostenaufwendig, auch lassen sich nicht alle Materialkombinationen sauber (funktionsgerecht) verschweißen.

Bekannt ist weiterhin, dass thermoplastisch und duroplastisch gebundene Vliese, vorzugsweise Baumwollfasermischvliese mit aufgesprühten, aufgerakelten, aufextrudierten oder filmbeschichteten Sperr(Schwer-)schichten ausgerüstet werden; auch in Sandwichbauweise.

Weiterhin ist Stand der Technik, dass man formgepresste thermoplastisch und duroplastisch gebundene Vliese direkt hinterschäumen kann, da diese eine hohe Eigenfestigkeit (Druckfestigkeit) besitzen; und somit die Absorberstruktur infolge Druck wenig bis gar nicht zerstört werden kann.

Beim (thermischen) Formpressen von mehrschichtig aufgebauten Absorbern, bestehend aus einer oder mehreren Deckschichten, Trägerschichten und Absorberschichten, ist Stand der Technik, dass während der Pressformung Pressluft durch Pressluftzuführungen in das Formpresswerkzeug eingeführt wird. Das dient u.a. dem Zweck der besseren Ausformung, der formschlüssigen Verbindung der Einzelschichten und der Aushärtung. Auch kann hierbei durch Anwendung von (luftdichten) Trenn- bzw. Sperrfolien/-schichten zwischen den einzelnen Schichten, insbes, den Absorberschichten, eine Verbesserung der akustischen Wirksamkeit erreicht werden. Siehe hierzu DE 197 34 913 A.

Das direkte Hinterschäumen von Leichtschaum-Absorbern mit Schaumstoffen, insbesondere mit hochgefüllten kompakten, ggf. mikrogeschäumten Polyurethan-(RIM)-Werkstoffen bzw. Schaumstoffen war bisher nicht realisierbar, da der im Schäumwerkzeug aufgebaute Druck die Leichtschaum(Absorber-)struktur zerdrückt bzw. zerstört; und damit die akustische Wirksamkeit, die Dimension und Funktion des Absorbers nicht mehr gegeben ist. Auch wird damit die aus akustischer und konstruktiver Sicht vorgegebene Dickentoleranz der Masse nicht eingehalten.

Auch das Schäumen in die offene Form, d.h., Einlegen des Absorbers in das Schäumwerkzeug, freies Schäumen auf den Absorber und danach die Form schließen, ist nicht realisierbar, da aufgrund der Reaktivität (Thermo-Rheokinetik) und der damit verbundenen Fließfähigkeit des Schaumes das Ausschäumen der Konturen nicht gegeben; und damit das Masse-Absorber-System unbrauchbar ist.

Auch das Aufsprühen von hochgefüllten PUR-Kompakt-Systemen ist aufgrund der sehr hohen Abrasion der Systeme nicht oder nicht ohne große Probleme in der Großserie realisierbar. Das erfordert eine ständige sehr kostspielige Wartung der Anlagen und Werkzeuge. Zudem sind vorgegebene bzw. einzuhaltende Masse-Dickentoleranzen durch das Aufsprühen schwer bzw. gar nicht prozessfähig einzuhalten.

Aufgabe der Erfindung ist es, ein Verfahren prozessfähig industriell anwendbar zu realisieren, das es gestattet, einen (Leicht-) Schaum-Absorber oder Vlies-Absorber direkt mit hochgefüllten (Kompakt-Polyurethan-(RIM)-) Schaumstoff zu hinterschäumen.

Erfindungsgemäß wird die Aufgabe dadurch gelöst, dass der Absorber masseseitig in ein durchschäumfestes Vlies oder eine durchschäumfeste Folie und auf der masseabgewandten Seite nicht oder in ein schall- und damit luftdurchlässiges Vlies eingehautet, dieser Absorber im Schäumwerkzeug positioniert, das Schäumwerkzeug geschlossen und der Absorber durch das luftdurchlässige Vlies oder direkt mit Druckluft beaufschlagt und anschließend der Schäumvorgang ausgelöst wird.

Im folgenden wird das erfindungsgemäße Verfahren anhand eines typischen Masse-Absorber-Systems, wie es im Motorraum von Kraftfahrzeugen Anwendung findet, dargestellt.

Das erfindungsgemäße Verfahren ist geeignet, die im Stand der Technik angeführten Nachteile der heute praktizierten Verbindungs-/Fügemöglichkeiten von Masse und Absorber aufzuheben, die Herstellungsverfahren und die Funktionalität zu verbessern; sowie den Prozessschritt Fügen generell einzusparen.

Eine erste Ausführungsform der vorliegenden Erfindung betrifft somit Verfahren zum Direkthinterschäumen von Absorber-Systemen, bei dem der Absorber aus einer Schaumstoffschicht oder Vliesschicht mit ein- oder zweiseitiger Deckschicht besteht, dadurch gekennzeichnet, dass man einen Absorber sehr geringer Dichte masseseitig mit einer durchschäumfesten Deckschicht versieht, den Absorber im Schäumwerkzeug positioniert und im Absorber über die masseabgewandte Seite im geschlossenen Schäumwerkzeug vor dem Auslösen des Schäumvorganges einen Druck aufbaut.

In einer weiteren Ausführungsform ist das Verfahren dadurch gekennzeichnet, dass man als druckaufbringendes Medium ein Medium im gasförmigen Aggregatzustand, insbesondere (Druck-)Luft einsetzt und mit einem Medium in gasförmigem Aggregatzustand im Absorber einen Druck von 0,5 bar bis 7 bar, insbesondere 1 bar bis 3 bar aufbaut.

In einer bevorzugten Ausführungsform setzt man als masseschichtseitige, durchschäumfeste Deckschicht ein Vlies oder eine Folie ein.

Des weiteren wird in einer Ausführungsform als Absorber ein offenporiger oder gemischtzelliger Schaumstoff mit einem Raumgewicht von 5 kg/m³ bis 38 kg/m³ eingesetzt.

Vorzugsweise wird in einer weiteren Ausführungsform als Absorber ein formgeschäumter Kaltschaum mit einem Raumgewicht von 35 kg/m³ bis 190 kg/m³ eingesetzt. Masseseitig sind diese Absorber mit einer durchschäumfesten Deckschicht ausgestattet.

In einer weiteren Ausführungsform wird als Absorber ein nichtverpresstes Vlies mit masseschichtseitiger, durchschäumfester Deckschicht eingesetzt.

Der vor dem Hinterschäumen aufzubauenden Druck wird beispielsweise über Ventile gesteuert und/oder geregelt. Der vor dem Hinterschäumen aufzubauende Druck wird gegebenenfalls über Ventile während des gesamten Schäumvorgangs definiert, geregelt und damit eingestellt.

In einer weiteren Ausführungsform ist das Verfahren dadurch gekennzeichnet, dass man den im Absorber vor dem Hinterschäumen aufzubauenden und während des gesamten Schäumvorgangs regelbaren Druck über die masseabgewandte Seite im Schäumwerkzeug durch Segmentbauweise der masseabgewandten Schäumwerkzeughälfte, partiell unterschiedlicher Intensität regelt und damit einstellt.

Die Erfindung besteht ferner in einem Absorbersystem, bei dem der Absorber aus einer Schaumstoffschicht oder Vliesschicht mit ein- oder zweiseitiger Deckschicht und einer Schaumstoffschicht besteht.

Bevorzugt, im Sinne der vorliegenden Erfindung, sollte das Schäum-Unterwerkzeug einen Luftdüsenabstand von 100 mm über die Werkzeugoberfläche, damit die masseabgewandte Absorberfläche aufzeigen, und der Absorber über das luftdurchlässige Vlies oder direkt bei geschlossenem Schäumwerkzeug mit einem Luftdruck von 2 bar beaufschlagt werden.

Je nach Aufbau und Struktur des Absorbers kann durch die Anordnung der Luftdüsen im Schäum-Unterwerkzeug und dem beaufschlagten Luftdruck die Verformungsstabilität des Absorbers eingestellt werden.

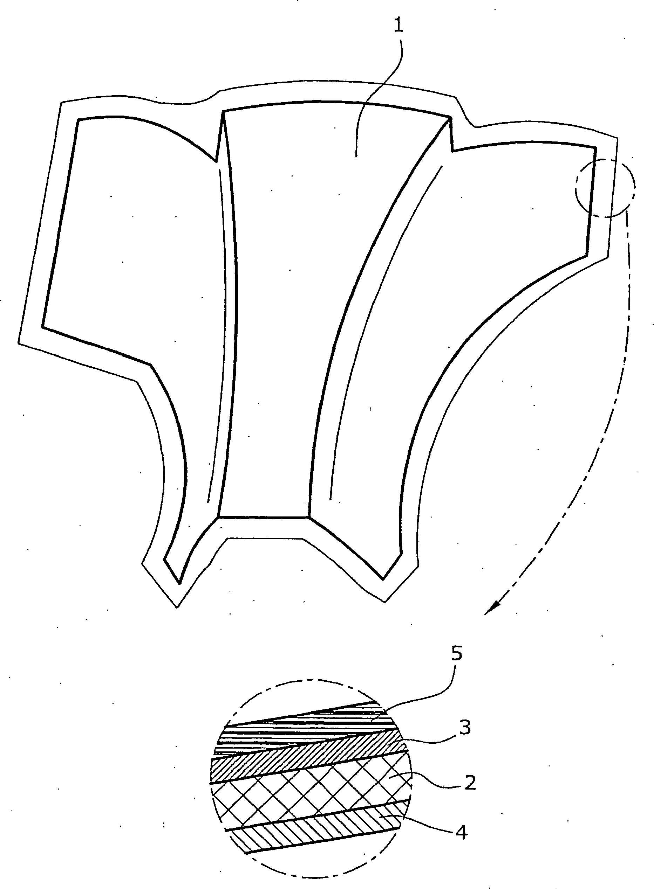

In Fig. 1 ist eine Schallisolierung, Getriebetunnel außen 1, als Masse-Absorber-System dargestellt, bei dem der Leichtschaumabsorber 2 masseseitig in ein durchschäumfestes Vlies 3 und auf der masseabgewandten Seite in ein luftdurchlässiges Vlies 4 eingehautet ist. Mit dem erfindungsgemäßen Verfahren kann ein Absorber mit hochgefülltem (Kompakt-Polyurethan-(RIM)-) Schaumstoff 5 direkt hinterschäumt werden.

Besonders bevorzugte Schallisolierungen, Masse-Absorber-Systeme, die mit dem erfindungsgemäßen Verfahren hergestellt werden können, sind Tunnel außen, Stirnwand Motorraum und Stirnwand Aggregateraum.

### Ausführungsbeispiel:

Ein Leichtschaumabsorber wurde mit dem Materialaufbau durchschäumfestes Vlies (masseseitig) Azetin® GPV MH 50/45 PE, Leichtschaum mit dem Raumgewicht 12 kg/m³ und der Dicke 18 mm, luftdurchlässiges Vlies (masseabgewandt) Coatilphoob® Z21PE im Formpressprozess hergestellt.

Dieser Absorber wurde in das (Hinter-)Schäumwerkzeug eingelegt und das Werkzeug geschlossen. Über das mit Luftdüsen ausgerüstete Unterwerkzeug wurde der Absorber durch das luftdurchlässige Vlies mit Druckluft beaufschlagt; und danach der Schäumvorgang mit einem handelsüblichen Kompakt(RIM)Schaum ausgelöst. Nach Beendigung des Schäumvorgangs erfolgte das Konturstanzen.

### Der direkthinterschäumte Absorber

Die direkthinterschäumte Masse hat über die Fläche eine Dicke von 3,0 +/- 0,5 mm. Die Verbindung zwischen Masse und Absorber ist äußerst fest und stabil. Eine Trennung von Masse und Absorber kann nur bei Zerstörung des Absorbers erfolgen. Damit ist für das Masse-Absorber-System Dimension und Funktionalität gegeben.

## Patentansprüche

1. Verfahren zum Direkthinterschäumen von Ab orber-Systemen, bei dem der Absorber aus einer Schaumstoffschicht (2) oder Vliesschicht mit ein- oder zweiseitiger Deckscht (3, 4) besteht, wobei man einen Absorber sehr geringer Dichte (2) masseseitig mit einer durchschäumfesten Deckschicht (3) versieht, den Absorber im Schäumwerkzeug positioniert und im Absorber über die masseabgewandte Seite im geschlossenen Schäumwerkzeug vor dem Auslösen des Schäumvorganges einen Druck aufbaut.

2. Verfahren nach Anspruch 1, **dadurch gekennzeichnet, dass** man als druckaufbringendes Medium ein Medium im gasförmigen Aggregatzustand, insbesondere (Druck-)Luft einsetzt.

3. Verfahren nach Anspruch 1 oder 2, **dadurch gekennzeichnet, dass** man mit einem Medium im gasförmigen Aggregatzustand im Absorber einen Druck von 0,5 bar bis 7 bar, insbesondere 1 bis 3 bar, aufbaut.

4. Verfahren nach einem der Ansprüche 1 bis 3, **dadurch gekennzeichnet, dass** man als masseseitige, durchschäumfeste Deckschicht (3) ein Vlies oder eine Folie einsetzt.

5. Verfahren nach einem der Ansprüche 1 bis 4, **dadurch gekennzeichnet, dass** man als Absorber (2) einen offenporigen oder gemischtzelligen Schaumstoff mit einem Raumgewicht von 5 kg/m³ bis 38 kg/m³ einsetzt.

6. Verfahren nach einem der Ansprüche 1 bis 5, **dadurch gekennzeichnet, dass** man als Absorber einen formgeschäumten Kaltschaum mit schwerschichtseitiger, durchschäumfester Deckschicht (3) einsetzt.

7. Verfahren nach Anspruch 6, **dadurch gekennzeichnet, dass** man einen Kaltschaum mit einem Raumgewicht von 35 kg/m³ bis 190 kg/m³ einsetzt.

8. Verfahren nach einem der Ansprüche 1 bis 7, **dadurch gekennzeichnet, dass** man als Absorber ein nichtverpresstes Vlies mit masseseitiger, durchschäumfester Deckschicht (3) einsetzt.

9. Verfahren nach einem der Ansprüche 1 bis 8, **dadurch gekennzeichnet, dass** man den Absorber vor dem Hinterschäumen aufzubauenden Druck über Ventile steuert und/oder regelt.

10. Verfahren nach einem der Ansprüche 1 bis 9, **dadurch gekennzeichnet, dass** man den im Absorber vor dem Hinterschäumen aufzubauenden Druck über Ventile während des gesamten Schäumvorgangs definiert, regelt und damit einstellt.

11. Verfahren nach einem der Ansprüche 1 bis 10, **dadurch gekennzeichnet, dass** man den im Absorber vor dem Hinterschäumen aufzubauenden und während des gesamten Schäumvorgangs regelbaren Druck über die masseabgewandte Seite im Schäumwerkzeug durch Segmentbauweise der masseabgewandten Schäumwerkzeughälfte, partiell unterschiedlicher Intensität regelt und damit einstellt.

12. Absorbersystem, bei dem der Absorber aus einer Schaumstoffschicht (2) oder Vliesschicht mit ein- oder zweiseitiger Deckschicht (3, 4) und einer Schaumstoffschicht (5) besteht, erhältlich nach einem Verfahren gemäß einem oder mehreren der Ansprüche 1 bis 11.

## Claims

1. A process for the direct foam-backing of absorber systems in which the absorber consists of a foam layer (2) or non-woven layer with a cover layer (3, 4) on one or both sides, wherein an absorber with a very low density (2) is provided with a foam-impermeable cover layer (3) on the mass side, the absorber is positioned within the foaming mold, and a pressure is built within the absorber from the side facing away from the mass in the closed foaming mold, before the foaming process is initiated.

2. The process according to claim 1, **characterized in that** a medium in a gaseous state of matter, especially (pressurized) air, is employed as a pressure-applying medium.

3. The process according to claim 1 or 2, **characterized in that** a pressure of from 0.5 bar to 7 bar, especially from 1 bar to 3 bar, is built within the absorber by means of a medium in a gaseous state of matter.

4. The process according to any of claims 1 to 3, **characterized in that** a non-woven material or a plastic sheet is employed as the foam-impermeable cover layer (3) on the mass side.

5. The process according to any of claims 1 to 4, **characterized in that** an open-pore or mixed-cell foam with a density of foam of from 5 kg/m³ to 38 kg/m³ is employed as the absorber (2).

6. The process according to any of claims 1 to 5, **characterized in that** a foam-molded cold foam having a foam-impermeable cover layer (3) on the heavy layer side is employed as the absorber.

7. The process according to claim 6, **characterized in that** a foam-molded cold foam with a density of foam of from 35 kg/m³ to 190 kg/m³ is employed.

8. The process according to any of claims 1 to 7, **characterized in that** a non-compressed non-woven material with a foam-impermeable cover layer (3) on the mass side is employed as the absorber.

9. The process according to any of claims 1 to 8, **characterized in that** the pressure to be built inside the absorber prior to the foam-backing process is controlled and/or regulated by valves.

10. The process according to any of claims 1 to 9, **characterized in that** the pressure to be built inside the absorber prior to the foam-backing process is defined, controlled and thus adjusted by valves during the whole foaming process.

11. The process according to any of claims 1 to 10, **characterized in that** the pressure to be built within the absorber before the foam-backing process, which is controllable during the whole foaming process, is controlled and thus adjusted from the side facing away from the mass within the foaming mold with a partially different intensity by a segment construction of the foaming mold part facing away from the mass.

12. An absorber system in which the absorber consists of a foam layer (2) or non-woven layer with a cover layer (3, 4) on one or both sides, and a foam layer (5) and which is obtainable by a process according to one or more of claims 1 to 11.

## Revendications

1. Procédé de moussage in situ direct de systèmes d'absorbeurs, l'absorbeur étant constitué d'une couche de matière mousse (2) ou d'une couche de non-tissé portant sur un ou deux côtés une couche de recouvrement (3,4), procédé dans lequel on munit un absorbeur de masse volumique très faible (2) d'une couche de recouvrement (3) résistante au moussage, sur le côté masse, on dispose l'absorbeur dans le moule d'expansion et on établit une pression dans l'absorbeur sur le côté opposé à la masse dans le moule d'expansion fermé, avant le démarrage du processus de moussage.

2. Procédé selon la revendication 1, **caractérisé en ce qu'**on utilise un milieu à l'état physique gazeux, en particulier de l'air (comprimé), comme milieu permettant d'établir la pression.

3. Procédé selon la revendication 1 ou 2, **caractérisé en ce qu'**on établit une pression de 0,5 à 7 bars, en particulier de 1 à 3 bars, dans l'absorbeur à l'aide d'un milieu à l'état physique gazeux.

4. Procédé selon l'une des revendications 1 à 3, **caractérisé en ce qu'**on utilise un non-tissé ou une feuille comme couche de recouvrement (3) résistante au moussage, formant le côté masse.

5. Procédé selon l'une des revendications 1 à 4, **caractérisé en ce qu'**on utilise, comme absorbeur (2), une matière mousse à pores ouverts ou à cellules mixtes, ayant un poids par unité de volume de 5 kg/m³ à 38 kg/m³.

6. Procédé selon l'une des revendications 1 à 5, **caractérisé en ce qu'**on utilise, comme absorbeur, une mousse formée à froid par expansion, munie d'une couche de recouvrement (3) résistante au moussage, formant le côté lourd de la couche.

7. Procédé selon la revendication 6, **caractérisé en ce qu'**on utilise une mousse formée à froid ayant un poids par unité de volume de 35 kg/m³ à 190 kg/m³.

8. Procédé selon l'une des revendications 1 à 7, **caractérisé en ce qu'**on utilise comme absorbeur un non-tissé non comprimé, muni d'une couche de recouvrement (3) résistante au moussage, formant le côté masse.

9. Procédé selon l'une des revendications 1 à 8, **caractérisé en ce qu'**on commande et/ou on règle la pression qu'il faut établir dans l'absorbeur avant le moussage in situ en utilisant des valves.

10. Procédé selon l'une des revendications 1 à 9, **caractérisé en ce qu'**on définit et on règle la pression qu'il faut établir dans l'absorbeur avant le moussage in situ en utilisant des valves, et on ajuste la pression de cette manière pendant tout le processus de moussage.

11. Procédé selon l'une des revendications 1 à 10, **caractérisé en ce que**, grâce au mode de construction par segments de la moitié du moule d'expansion se trouvant du côté opposé à la masse, on règle la pression qu'il faut établir dans l'absorbeur avant le moussage en série et qui peut être réglée pendant tout le processus de moussage, à des valeurs en partie différentes sur le côté opposé à la masse dans le moule d'expansion, et on ajuste la pression de cette manière.

12. Système d'absorbeur, pour lequel l'absorbeur est constitué par une couche de matière mousse (2) ou une couche de non-tissé portant sur un ou deux côtés une couche de recouvrement (3,4), et une couche de matière mousse (5), qu'on peut obtenir suivant un procédé selon une ou plusieurs des revendications 1 à 11.
